# EUROPEAN PATENT APPLICATION

(11) **EP 4 770 012 A1**
(43) Date of publication of application: **01.07.2026**
(21) Application number: 25225589.8
(22) Date of filing: 19.12.2025
(51) Int. Cl.: H04L 9/40, H04W 12/06, H04W 12/77, H04W 12/069

(54) **QR CODE-BASED AUTHENTICATION APPARATUS AND METHOD**

(30) Priority: 26.12.2024 KR 20240196950
(71) Applicant: Electronics and Telecommunications Research Institute, Daejeon 34129 (KR)
(72) Inventor: JUNG, Younghoon, 34186 Daejeon (KR); LEE, Dongsoo, 34186 Daejeon (KR); RYU, Hyomyoung, 34186 Daejeon (KR); ROH, Dongyoung, 34186 Daejeon (KR); KOO, Bonwook, 34186 Daejeon (KR)
(74) Representative: Betten & Resch

(57) **Abstract**

Disclosed herein are a QR code-based authentication apparatus and method. The QR code-based authentication method includes, as a user authentication request is received from a user computer, transmitting, by a server, data required for QR code generation to the user computer, as the user computer generates and outputs a QR code, scanning, by a user mobile device, the QR code, and as an authentication request is received from the user mobile device using QR code scan information, performing, by the server, user authentication, wherein the user computer includes a web browser and an application module, and performs user authentication by verifying whether public Internet Protocol (IP) addresses of the user mobile device, the web browser, and the application module are identical to each other.

## Description

### BACKGROUND OF THE INVENTION

### 1. Technical Field

The following embodiments relate to technology for preventing phishing attacks by an attacker when user authentication is performed based on a Quick Response (QR) code.

### 2. Description of the Related Art

A QR code is one of two-dimensional (2D) barcodes, and has been created to be recognized more quickly than conventional 2D barcodes. A QR code includes square markers for recognition (scanning) at respective corners so that it can be recognized without distortion regardless of the direction or angle at which a scanner is used, and contains pieces of binary data composed of black dots on a white background between these markers. The amount of data that can be contained in a QR code may vary depending on spacing between the markers of the QR code. At maximum capacity, a QR code can hold about 7,089 numeric characters and about 4,296 ASCII characters.

Since a QR code can represent ASCII characters, it has been widely utilized in many fields in addition to the original invention purpose of storing product codes.

However, because a QR code itself does not essentially require information of an issuer and a typical QR code does not contain information of an issuer and a digital (electronic) signature, there is a need to verify whether a QR code being scanned is valid during a QR code scanning process. If a QR code containing the address of a phishing site is scanned, there may be a risk of personal information being stolen. In addition, in e-commerce transactions, a problem may arise in that, when an incorrect QR code is read and a communication session is established, payment may be transmitted to a wrong recipient.

Meanwhile, phishing is a method of fraudulently obtaining confidential information, such as passwords and credit card details, by disguising emails, text messages, or the like as if they were sent by a trusted person or company.

A phishing site imitates a legitimate site and is used to steal login information or personal information of users.

Further, a Man-in-the-Middle (MITM) attack refers to an attack that intercepts communication between two parties. An attacker intrudes into communication between two communicating parties to steal or forge/falsify information. It may be possible to respond to such an MITM attack based on authentication using certificates and key sharing. For example, in a public key infrastructure (PKI), parties are mutually authenticated using certificates authenticated by a Certificate Authority (CA), and thereafter share keys required for communication through key sharing. Thereafter, the parties communicate with each other by encrypting data or the like using the shared keys.

Active phishing is an attack that simultaneously performs phishing and MITM attacks. For example, an attacker accesses the original site and shows information thereof instead of a phishing site when showing the phishing site to users. Thereafter, each user may provide login information, and the attacker may perform authentication based on the provided login information, and may normally show a screen after authentication has been completed. At this time, authentication completion information refers to information indicating that authentication has been performed to identify the user and proceed to the next process. Although an attacker has none of login information (e.g., ID, password, and the like), the attacker may steal authentication completion information.

### SUMMARY OF THE INVENTION

An embodiment is intended to perform authentication on a personal computer (PC) using a user certificate stored in a mobile device through a QR code.

An embodiment is intended to prevent the leakage of personal information even when a user PC is placed in an environment in which the leakage of personal information is a concern, such as a PC in a public place.

An embodiment is intended to prevent phishing attacks aimed at stealing personal information and active phishing attacks aimed at stealing authentication.

In accordance with an aspect, there is provided a Quick Response (QR) code-based authentication method, including as a user authentication request is received from a user computer, transmitting, by a server, data required for QR code generation to the user computer, as the user computer generates and outputs a QR code, scanning, by a user mobile device, the QR code, and as an authentication request is received from the user mobile device using QR code scan information, performing, by the server, user authentication, wherein the user computer includes a web browser and an application module, and performs user authentication by verifying whether public Internet Protocol (IP) addresses of the user mobile device, the web browser, and the application module are identical to each other.

Transmitting the data required for QR code generation to the user computer may include, as the user authentication request is transmitted to the server through the web browser, performing two-way authentication and sharing of a first key between the server and the application module using a certificate of the server and a certificate of the application module, and determining, by the server, whether authentication has failed depending on whether the public IP addresses of the web browser and the application module are identical to each other.

Transmitting the data required for QR code generation to the user computer may further include, as a private IP address and a subnet mask of the application module, which are encrypted using the first key, are received, transmitting data required for QR code generation, which is encrypted using the first key, to the application module.

Scanning the QR code may include generating, by the application module, the QR code using the data received from the server and required for QR code generation and displaying the QR code on a screen of the user computer, and scanning the QR code through an application previously installed on the user mobile device.

Performing the user authentication may include, as the authentication request is received from the user mobile device using the QR code scan information, determining whether authentication has failed depending on whether the public IP address of the web browser is identical to the public IP address of the user mobile device.

Performing the user authentication may further include performing, by the server, one-way authentication on the user mobile device using a certificate of the server, and sharing a second key with the user mobile device when authentication has succeeded, transmitting, by the server, a private IP address and a subnet mask of the application module, which are encrypted using the second key, to the user mobile device, transmitting, by the user mobile device, a private IP address and a subnet mask of the user mobile device, which are encrypted using the second key, to the server, and delivering, by the server, a private IP address and a subnet mask of the user mobile device, which are encrypted using the first key, to the application module.

Performing the user authentication may further include determining, by the user mobile device and the application module, whether authentication has failed by verifying whether the private IP addresses of each other are identical to actual IP addresses using the private IP addresses and the subnet masks that are respectively received by the user mobile device and the application module through internal network communication.

Performing the user authentication may further include, as an authentication success verification completion message is received from the application module, preparing, by the user mobile device, user authentication through biometric recognition of the user, performing user authentication on the server using the user certificate, and as a user authentication request using the certificate is received from the user mobile device, performing, by the server, authentication and transmitting a result indicating whether authentication has succeeded to the web browser.

In accordance with another aspect, there is provided a server, including a memory configured to store at least one program, and a processor configured to execute the program, wherein the program is configured to perform, as a user authentication request is received from a user computer, transmitting data required for QR code generation to the user computer, and as an authentication request is received from a user mobile device using QR code scan information, performing user authentication, wherein the user computer includes a web browser and an application module, and wherein the program is configured to perform user authentication by verifying whether public Internet Protocol (IP) addresses of the user mobile device, the web browser, and the application module are identical to each other.

The program may be configured to, in transmitting the data required for QR code generation to the user computer, as the user authentication request is received through the web browser, perform two-way authentication and sharing of a first key between the server and the application module using a certificate of the server and a certificate of the application module, and determine whether authentication has failed depending on whether the public IP addresses of the web browser and the application module are identical to each other.

The program may be configured to, in transmitting the data required for QR code generation to the user computer, as a private IP address and a subnet mask of the application module, which are encrypted using the first key, are received, transmit the data required for QR code generation, which is encrypted using the first key, to the application module.

The program may be configured to, in performing the user authentication, as the authentication request is received from the user mobile device using QR code scan information, determine whether authentication has failed depending on whether the public IP address of the web browser is identical to the public IP address of the user mobile device.

The program may be configured to, in performing the user authentication, perform one-way authentication on the user mobile device using the certificate of the server, and share a second key with the user mobile device when authentication has succeeded, in performing the user authentication, transmit a private IP address and a subnet mask of the application module, which are encrypted using the second key, to the user mobile device, and as a private IP address and a subnet mask of the user mobile device, which are encrypted using the second key, are received from the user mobile device, deliver a private IP address and a subnet mask of the user mobile device, to the application module.

The program may be configured to, in performing the user authentication, as the user authentication request using the certificate is received from the user mobile device, perform authentication and transmit a result indicating whether authentication has succeeded to the web browser.

In accordance with a further aspect, there is provided a user mobile device, including a memory configured to store at least one program, and a processor configured to execute the program, wherein the program is configured to transmit a user authentication request to a server using a QR code output to a user computer connected to an identical router, wherein the user computer includes a web browser and an application module, and wherein the user authentication is performed after verifying whether public IP addresses of the web browser and the application module are identical to each other.

The QR code may be generated by the application module using data received from the server and required for QR code generation, and the program may be configured to transmit an authentication request to the server by scanning the QR code, and share a second key with the server through one-way authentication using a certificate of the server when the authentication has succeeded.

The program may be configured to receive a private IP address and a subnet mask of the application module, which are encrypted using the second key, from the server, transmit a private IP address and a subnet mask of the user mobile device, which are encrypted using the second key, to the server, and thereafter determine whether authentication has failed depending on whether the private IP address of the application module and the private IP address of the user mobile device are identical to actual IP addresses through internal network communication.

The program may be configured to, as an authentication success verification completion message is received from the application module, obtain a user certificate through biometric recognition of the user, and perform user authentication on the server using the user certificate.

In accordance with yet another aspect, there is provided a user computer, including a memory configured to store an application module, and a processor configured to execute the application module, wherein the application module is configured to perform two-way authentication with a server and sharing of a first key with the server using a certificate of the server and a certificate of the application module and, and then transmit a private IP address and a subnet mask of the application module to the server, and generate and output a QR code using data required for QR code generation, which is encrypted using the first key from the server.

The application module may be configured to, as a private IP address and a subnet mask of the user mobile device, which are encrypted using the first key, are received from the server, determine whether authentication has failed by verifying whether the private IP addresses of each other are identical to actual IP addresses using the private IP addresses and the subnet masks that are respectively received by the user mobile device and the application module through internal network communication.

### BRIEF DESCRIPTION OF THE DRAWINGS

The above and other objects, features and advantages of the present disclosure will be more clearly understood from the following detailed description taken in conjunction with the accompanying drawings, in which:
FIGS. 1 and 2 are diagrams illustrating a scheme in which an attacker generates a VPN environment;
FIG. 3 is a schematic configuration diagram of a QR code-based authentication system to which an embodiment is applied;
FIG. 4 is a flowchart for explaining in detail a QR code-based authentication method according to an embodiment; and
FIG. 5 is a diagram illustrating the configuration of a computer system according to an embodiment.

### DESCRIPTION OF THE PREFERRED EMBODIMENTS

Advantages and features of the present disclosure and methods for achieving the same will be clarified with reference to embodiments described later in detail together with the accompanying drawings. However, the present disclosure is capable of being implemented in various forms, and is not limited to the embodiments described later, and these embodiments are provided so that this disclosure will be thorough and complete and will fully convey the scope of the present disclosure to those skilled in the art. The present disclosure should be defined by the scope of the accompanying claims. The same reference numerals are used to designate the same components throughout the specification.

It will be understood that, although the terms "first" and "second" may be used herein to describe various components, these components are not limited by these terms. These terms are only used to distinguish one component from another component. Therefore, it will be apparent that a first component, which will be described below, may alternatively be a second component without departing from the technical spirit of the present disclosure.

The terms used in the present specification are merely used to describe embodiments, and are not intended to limit the present disclosure. In the present specification, a singular expression includes the plural sense unless a description to the contrary is specifically made in context. It should be understood that the term "comprises" or "comprising" used in the specification implies that a described component or step is not intended to exclude the possibility that one or more other components or steps will be present or added.

Unless differently defined, all terms used in the present specification can be construed as having the same meanings as terms generally understood by those skilled in the art to which the present disclosure pertains. Further, terms defined in generally used dictionaries are not to be interpreted as having ideal or excessively formal meanings unless they are definitely defined in the present specification.

The present disclosure provides a technology for providing an active phishing prevention function through a method for performing authentication in the state in which a user does not transfer a user certificate in his or her mobile device to a computer, and thereafter obtaining authentication completion information from the computer. Before the present disclosure is described in detail, technologies related to computers and Internet and technologies related to authentication will be described.

### 1) Technologies related to computers and Internet

### A) QR code

A QR code is one of two-dimensional (2D) barcodes, and has been created to be recognized more quickly than conventional 2D barcodes. A QR code includes square markers for recognition (scanning) at respective corners so that it can be recognized without distortion regardless of the direction or angle at which a scanner is used, and contains pieces of binary data composed of black dots on a white background between these markers. The amount of data that can be contained in a QR code may vary depending on spacing between the markers of the QR code. At maximum capacity, a QR code can hold about 7,089 numeric characters and about 4,296 ASCII characters.

Since a QR code can represent ASCII characters, it has been widely utilized in many fields in addition to the original invention purpose of storing product codes.

However, because a QR code itself does not essentially require information of an issuer and a typical QR code does not contain information of an issuer and a digital (electronic) signature, there is a need to verify whether a QR code being scanned is valid during a QR code scanning process. If a QR code containing the address of a phishing site is scanned, there may be a risk of personal information being stolen. In addition, in e-commerce transactions, a problem may arise in that, when an incorrect QR code is read and a communication session is established, payment may be transmitted to a wrong recipient.

### B) TPM

A Trusted Platform Module (TPM) is a secure cryptographic key storage of a digital terminal, which cannot be accessed from the outside of the digital terminal. A TPM is implemented as a separate chip, other than a typical storage device, in a substrate or is provided to be integrated into a CPU, and access to the TPM is also made only through a command different from the typical storage device. TPM generally provides functions such as generating cryptographic keys (e.g., symmetric keys, private keys, and public keys), extracting public keys, performing encryption using secret keys, generating digital (electronic) signatures using private keys, verifying digital signatures using public keys, or the like, and does not expose the secrete keys (symmetric keys and private keys).

When TPM and OS are managed in association with each other, OS may construct a secure encryption device using TPM, and may provide a unique cryptographic key storage space and an encryption function for each program running on OS.

When data is encrypted and managed through TPM, it is impossible to obtain plaintext data or forge a digital signature unless the entire device including the TPM is seized.

### C) Network

A network layer model is a model structurized by dividing a data delivery process into layers. Methods for dividing the data delivery process into layers include an Open Systems Interconnection (OSI) model and a Transmission Control Protocol/Internet Protocol (TCP/IP) model, and description is made based on the OSI model. A physical layer, which is the lowest layer, defines methods for handling electrical, wireless, and optical signals. A data link layer, which is a second layer, processes data transmission between physically adjacent devices, and takes Media Access Control (MAC) addresses given to respective devices as a transmitter (sender) and a receiver. Generally, a network through which communication can be performed using only MAC addresses is called "the same network". A network layer, which is a third layer, performs communication between different networks, and takes Internet Protocol (IP) addresses as a sender and a receiver. In the network layer, a subnet mask or Classless Inter-Domain Routing (CIDR) may be used to replace a process of determining whether devices are present on the same network through MAC addresses. When the devices are determined to be present on the same network, communication with all of indirectly or directly connected devices can be performed in combination with the MAC addresses of the second layer.

A transport layer, which is a fourth layer, handles a procedure for transmitting/receiving data during a communication process between devices, and a representative protocol thereof is a Transmission Control Protocol (TCP) or User Datagram Protocol (UDP). A session layer, which is a fifth layer, and a presentation layer, which is a sixth layer, are combined with the transport layer to facilitate organic transmission of data, and a representative protocol that enables secure communication to be established by combining these layers is a Transport Layer Security (TLS) protocol.

An application layer, which is a seventh and final layer, is a layer that handles data exchanged by actual software, and is a layer through which Internet data, commonly called HTTP, is transmitted/received.

A router (or an Internet sharing device) that is widely used is provided to allow multiple pieces of equipment existing on the same network to share and use a single public IP address assigned at the third layer. The pieces of equipment in one router may have the same subnet mask, and may be assigned private IP addresses, respectively, thus performing communication. When communication is performed between IP addresses on the same network, the private IP address of the counterpart appears without change. When communication with an external network outside the same network is performed, a public IP address, instead of the private IP address of the corresponding equipment, is shown to the counterpart.

### D) VPN

A Virtual Private Network (VPN) is a function used to allow pieces of equipment on different networks to be treated as if they were on the same network. A typical VPN may be established such that a network manager activates a VPN function through a router and authorized external users can participate in the VPN function.

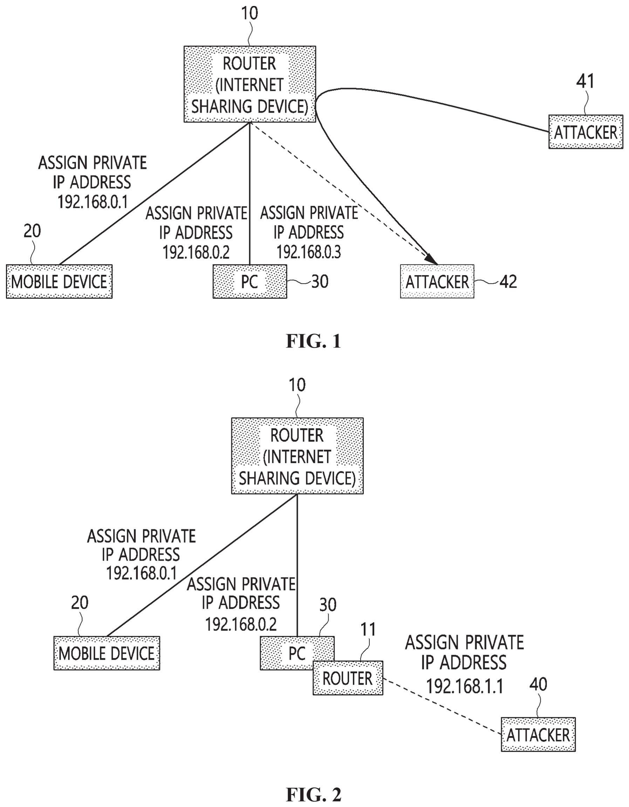

FIGS. 1 and 2 are diagrams illustrating a scheme in which an attacker generates a VPN environment.

Referring to FIG. 1, an attacker 41 is present outside a router 10, but the attacker 41 may be assigned a private IP address from the router 10 through a VPN function, and may communicate with a mobile device 20 and a Personal Computer (PC) 30 using the private IP address.

The public IP addresses of the mobile device 20, the PC 30, and an attacker 42 are identical to each other. Because, in this environment, the attacker 42 needs to attack the router 10, it is almost impossible to create the environment illustrated in FIG. 1 through only an active phishing attack.

If an attacker created this environment using a method other than active phishing, the personal information of each user may be stolen more easily than through the active phishing attack. Therefore, the present disclosure does not consider the VPN environment such as that illustrated in FIG. 1.

A VPN environment that can be created through an active phishing attack is as illustrated in FIG. 2. This represents the case where a software router 11 is installed on a PC 30, and thereafter a private IP address is assigned from the router 11.

Since the software router 11 may be induced to be downloaded and installed from a phishing site, the VPN environment such as that illustrated in FIG. 2 can be sufficiently constructed by an attacker. In the environment illustrated in FIG. 2, the public IP addresses of the mobile device 20, the PC 30, and an attacker 40 are identical to each other.

However, because the router 11 (i.e., router installed on the PC) that assigns a private IP address to the attacker 40 and the router 10 that assigns private IP addresses to the mobile device 20 and the PC 30 are different from each other, it is impossible to perform communication between the attacker 40 and the mobile device 20 or between the attacker 40 and the PC 30 using the private IP addresses.

### 2) Technologies related to authentication

### A) User authentication

User authentication is the act of verifying the identity of the counterpart between transaction parties, and is intended to, in a network environment, establish the validity of an identity claim made by the counterpart between the transaction parties (such as a person, a process, a client, a server, or equipment) during a single session. Establishing the validity means verifying that the identity of a user is valid and trusted through an authentication procedure.

### B) PKI

A Public Key Infrastructure (PKI) is an authentication system using a public key encryption scheme, wherein each participant may be issued a digital certificate through a trusted certificate authority (CA) and may perform authentication using the certificate. The certificate generally follows the X.509 format and includes the public key, name, etc. of a certificate owner. For certificate details, the certificate authority generates a digital signature, and issues a certificate with the digital signature attached to the end of the certificate. In the PKI, all participants share the certificate of a trusted Root Certificate Authority (Root CA), and each certificate authority generally has a certificate issued by the root certificate authority whereas ordinary participants have certificates issued by the certificate authority.

In this PKI, all participants have a certificate chain starting from the root CA. When the participants trust each other's root CA, they can also trust mutual digital signatures. Generally, the PKI is widely utilized in Secure Sockets Layer (SSL)/Transport Layer Security (TLS) which verifies whether mutual participants are legitimate participants in network communication.

In Korea, Government PKI (GPKI) that is PKI, which has a legal effect in a public sector, is operated, and National PKI (NPKI) that is a joint certificate system, which can be used in a private sector, is also operated. The root authentication authority of the two PKIs is the Ministry of the Interior and Safety.

### C) Mobile simple authentication

Simple authentication is a method for easily and quickly performing user authentication through a trusted terminal. In Korea, most mobile terminals require identity verification during a Universal Subscriber Identity Module (USIM) issuance process. Once identity verification is completed, a private key is securely stored in a device, and this key may be used for encryption, decryption, and digital signatures through biometric authentication of the device. Mobile simple authentication that enables an authentication procedure to be completed using only biometric authentication when user authentication is required while using the Internet or an application through the private key stored in such a way may be utilized. In Korea, most formats of mobile simple authentication may be classified into the form of sending a one-time token via a phone number and the form of completing authentication through various certificates issued by various types of certificate authorities and pre-stored in a mobile device. In the latter case, a QR code may also be used in a process of delivering information required for a digital signature.

### 3) Phishing types

### A) phishing

Phishing is a method of fraudulently obtaining confidential information, such as passwords and credit card details, by disguising emails, text messages, or the like as if they were sent by a trusted person or company.

A phishing site imitates a legitimate site and is used to steal login information or personal information of users.

### B) Man-in-the-Middle (MITM) attack

A Man-in-the-Middle (MITM) attack refers to an attack that intercepts communication between two parties. An attacker intrudes into communication between two communicating parties to steal or forge/falsify information. It may be possible to respond to such an MITM attack based on authentication using certificates and key sharing. In PKI, parties mutually authenticate each other using certificates authenticated by CA, and thereafter share a key required for communication through key sharing. Thereafter, the parties communicate with each other by encrypting data or the like using the shared key.

### C) Active phishing

Active phishing is an attack that simultaneously performs phishing and MITM attacks. For example, an attacker accesses the original site and shows information thereof instead of a phishing site when showing the phishing site to users. Thereafter, each user may provide login information, and the attacker may perform authentication based on the provided login information, and may normally show a screen after authentication has been completed. At this time, authentication completion information refers to information indicating that authentication has been performed to identify the user and proceed to the next process. Although an attacker has none of login information (e.g., ID, password, and the like), the attacker may steal authentication completion information.

Therefore, in an embodiment, a QR code-based authentication technology for preventing a phishing attack aimed at stealing personal information and an active phishing attack aimed at stealing authentication is proposed.

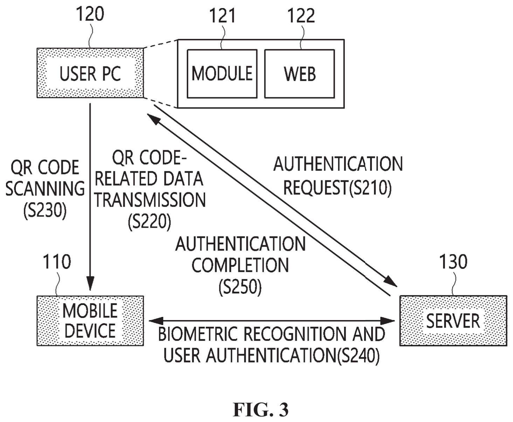

FIG. 3 is a schematic configuration diagram of a QR code-based authentication system to which an embodiment is applied.

Referring to FIG. 3, the QR code-based authentication system to which the embodiment is applied may include a user mobile device 110 (hereinafter also referred to as a 'mobile device'), a user computer (PC) 120, and a server 130.

The user mobile device 110, the user PC 120, and the server 130 may be issued in advance a user certificate, a module certificate, and a server certificate, respectively, from a certificate server (not illustrated), and the certificate server may manage the certificates.

However, in the following embodiment, detailed description of a procedure for verifying the validity of each certificate through the certificate server will be omitted.

The mobile device 110 is a device that has been previously issued a user certificate, by which the user can be authenticated, from the certificate server.

Therefore, the mobile device 110 may securely store the certificate and private key of the user using a password or biometric authentication, and may use the password or biometric authentication to generate a signature.

Further, an application having a function required for an authentication process needs to be installed in advance on the mobile device 110, and it is assumed that the installed application has not been tampered with.

The user PC 120 may include a web browser 122 (hereinafter also referred to 'WEB') and an application module 121 (hereinafter also referred to as a 'module').

Here, the WEB 122 may refer to the Internet browser of the user PC 120 desiring to obtain authentication completion information from the server 130.

Further, the module 121 may be an application on the user PC 120 desired to be authenticated, and may be installed in advance before authentication.

Such a module 121 may need a storage space accessible only by the module so as to store a private key, and may be issued in advance a module certificate from the certificate server when the module is installed. An example of the storage space accessible only by the module includes a TPM.

Here, it is assumed that the module 121 has not been tampered with, similar to the application installed on the mobile device 110.

The server 130 may be a device that manages the site which the user attempts to access and perform authentication.

Such a server 130 communicates with the mobile device 110, and the WEB 122 and the module 121 of the user PC 120, and performs user authentication through the user certificate.

Here, the server 130 also needs to be issued in advance a server certificate from the certificate server.

In the above-described system, QR code-based authentication may be performed based on the following procedure.

First, as a user authentication request is received from the user PC 120 at step S210, the server 130 transmits data required for QR code generation to the user PC 120 at step S220.

Then, the user PC 120 generates and outputs a QR code, and the mobile device 110 scans (recognizes) the QR code at step S230.

Thereafter, as an authentication request is received from the mobile device 110 based on QR code scan information, the server 130 performs user authentication at step S240, and then sends an authentication completion message to the user PC 120 at step S250.

In this case, unless personal information is input as in the case of the embodiment in a conventional authentication method using a QR code, a phishing attack can be prevented. However, for the following reasons, an active phishing attack cannot be prevented.

First, as the user clicks an authentication request button for authentication using the QR code at the phishing site accessed through the WEB 122 at step S210, an attacker ignores the authentication request made by the user, and transmits an authentication request from an attacker PC to the server 130.

Thereafter, a QR code generated by the attacker PC based on the requested information is shown to the user. This deceives the user in the same way as when the server 130 transmits the QR code at step S220 illustrated in FIG. 3.

Then, the user scans the QR code in the same way as that of step S230 of FIG. 3, and completes user authentication in the same way as that of step S240.

Further, because the attacker PC requests authentication, the server 130 transmits authentication completion information to the attacker PC instead of the user PC 120 when step S250 illustrated in FIG. 3 is performed.

That is, as described above, the conventional authentication method using a QR code is likely to prevent a phishing attack, but cannot prevent an active phishing attack.

Therefore, in the embodiment, a QR code-based authentication apparatus and method that are capable of preventing an active phishing attack are proposed.

In an embodiment, the user does not enter personal information on the WEB 122, thus preventing a phishing attack.

Also, in order to prevent an active phishing attack, it should be able to verify whether a PC communicating with the server 130 is the user PC 120 or the attacker PC.

However, it is very difficult for the user who does not recognize that he or she has accessed the phishing site to perform such verification, and thus the embodiment is intended to perform such verification through authentication procedures in several stages.

Furthermore, according to an embodiment, the mobile device 110 and the user PC 120 need to be present on the same network. This means that the mobile device 110 and the user PC 120 are connected to the same router.

Then, the public IP addresses of the mobile device 110 and the user PC 120 are identical to each other. In the router, the mobile device 110 and the user PC 120 may be assigned private IP addresses corresponding to their own MAC addresses.

An external device connected through a VPN or the like cannot communicate with devices inside the router through private IP addresses. When an attacker attempts to make an active phishing attack through a phishing site, the attacker PC and the user PC 120 may be present on different networks.

That is, that the attacker PC and the user PC 120 are present on the same network may mean that an attacker is present in close proximity to the user. In this case, since an attacker can steal personal information by methods easier than a phishing attack, the embodiment assumes that the attacker PC and the user PC 120 are present on different networks.

That is, in an embodiment, an active phishing attack can be prevented by verifying that the mobile device 110 and the user PC 120 are present on the same network.

When the attacker PC and the user PC 120 are present on the different networks, the attacker PC and the mobile device 110 are also present on different networks.

Further, when an active phishing attack is attempted, the WEB and the module which communicate with the server 130 are the WEB and the module of the attacker PC, rather than the user PC 120. If the attacker does not change the public IP address to be identical to that of the user PC 120 using the VPN, the public IP address of the attacker PC connected to the server 130 may be different from the public IP address of the mobile device 110.

Therefore, the embodiment verifies whether the public IP addresses of the mobile device 110, the WEB 122, and the module 121 are identical to each other, thus preventing the occurrence of the above-described situation.

When the attacker changes the public IP address to be identical to that of the user PC 120 using the VPN, the public IP address of the attacker PC connected to the server 130 is identical to the public IP address of the mobile device 110, and thus the attacker passes the verification in a process of verifying whether the public IP addresses of the mobile device 110, the WEB 122, and the module 121 are identical to each other.

However, since the attacker PC is present on a network different from that of the user PC 120, the active phishing attack may be prevented for the following reasons.
1. When the module of the attacker PC has passed authentication using the module certificate, the corresponding module has not be tampered with/altered.
2. A private IP address transmitted from the module of the attacker PC is a private IP address of a network different from that of the mobile device 110.
3. The private IP addresses transmitted from the module and the mobile device are transmitted during an authentication process using the certificate, thus making it impossible for the attacker to forge/falsify the private IP addresses.
4. Since the mobile device and the attacker PC are present on different networks, they cannot communicate with each other through private IP addresses.
5. The mobile device and the module verify whether their private IP addresses are identical through internal communication using the private IP addresses of the module and the mobile device received from the server 130.

This is intended to verify whether the mobile device and the module are present on the same network, and the presence of the mobile device and the module may be sensed even in the active phishing attack using the VPN.

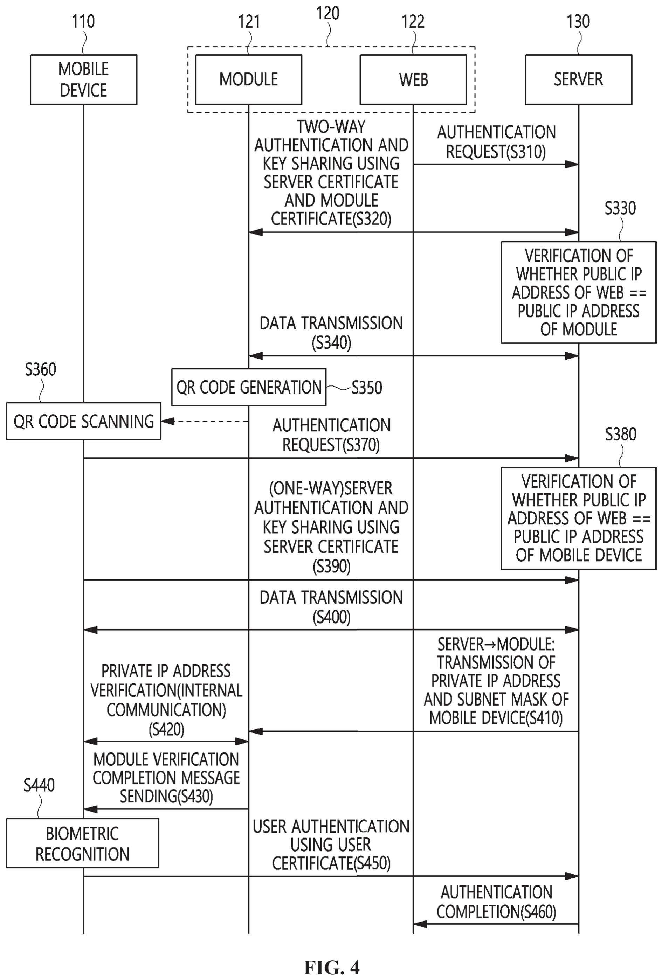

FIG. 4 is a flowchart for explaining in detail a QR code-based authentication method according to an embodiment.

Referring to FIG. 4, the QR code-based authentication method according to the embodiment may include a step at which, as a user authentication request is received from the user PC 120, the server 130 transmits data required for QR code generation to the user PC 120, a step at which, as the user PC 120 generates and outputs a QR code, the mobile device 110 scans the QR code, and a step at which, as an authentication request is received from the mobile device 110 using QR code scan information, the server 130 performs user authentication.

In this case, user authentication may be performed by verifying whether the public IP addresses of the mobile device 110, the WEB 122, and the module 121 are identical to each other.

First, as the user authentication request is transmitted to the server 130 through the WEB 122 at step S310, two-way (mutual) authentication and sharing of a first key between the server 130 and the module 121 may be performed using the certificate of the server 130 and the certificate of the module 121 at step S320.

Here, at step S310, the user makes an authentication request (through login or the like).

Also, when authentication fails at step S320, an authentication procedure is terminated.

Thereafter, the server 130 determines whether authentication has failed depending on whether the public IP addresses of the WEB 122 and the module 121 are identical to each other at step S330. That is, the server 130 verifies whether the public IP addresses of the WEB 122 and the module 121 obtained at steps S310 and S320 are identical to each other. Here, when the public IP addresses are not identical to each other, an authentication failure result is transmitted to the WEB 122, and the authentication procedure is terminated.

Next, the module 121 and the server 130 perform mutual data transmission/reception using the first key, shared at step S320, at step S340.

That is, the module 121 transmits a private IP address and a subnet mask of the module 121, which are encrypted using the first key, to the server 130, and the server 130 transmits data required for QR code generation, which is encrypted using the first key, to the module 121.

The module 121 generates a QR code using the data required for QR code generation, received from the server 130, and displays the QR code on a screen at step S350.

Then, the mobile device 110 scans the QR code displayed on the screen of the user PC 120 at step S360, and then transmits authentication request to the server 130 at step S370.

In this case, scanning of the QR code may be conducted through an application previously installed on the mobile device 110.

As the server 130 receives the authentication request from the mobile device 110 using the QR code scan information, an authentication failure is determined depending on whether the public IP address of the WEB 122 is identical to the public IP address of the mobile device 110 at step S380. That is, the server 130 verifies whether the public IP address of the WEB 122 and the mobile device 110 obtained at steps S310 and S370 are identical to each other.

Here, authentication success means that the public IP addresses of the WEB 122, the module 121, and the mobile device 110 are identical to each other.

Furthermore, when the public IP addresses of the WEB 122 and the mobile device 110 are different from each other, the server 130 transmits an authentication failure result to the WEB 122, and terminates the authentication procedure.

Next, the server 130 performs one-way authentication on the mobile device 110 using its own certificate, and shares a second key with the mobile device 110 when authentication has succeeded at step S390. Here, when authentication fails, the authentication procedure is terminated.

Thereafter, the server 130 and the mobile device 110 transmit and receive data encrypted using the second key at step S400.

That is, the mobile device 110 transmits a private IP address and a subnet mask of the mobile device 110, which are encrypted using the second key, to the server 130. Furthermore, the server 130 transmits the private IP address and the subnet mask of the module 121, which are encrypted using the first key obtained at step S340, to the mobile device 110. Furthermore, the server 130 delivers the private IP address and the subnet mask of the mobile device 110, which are encrypted using the first key, to the module 121.

The mobile device 110 and the application module 121 determine whether authentication has failed by verifying whether their own private IP addresses are identical to actual private IP addresses based on the private IP addresses and subnet masks that have been respectively received through internal network communication at step S420. The module 121 sends a module verification completion message to the mobile device 110 at step S430.

Here, the mobile device 110 and the module 121 terminate the authentication procedure when their own private IP addresses are not identical to the actual IP addresses.

As the mobile device 110 receives an authentication success verification completion message from the module 121, the mobile device 110 obtains a user certificate through biometric recognition of the user at step S440. Here, when biometric recognition fails, the authentication procedure is terminated.

Thereafter, the mobile device 110 performs user authentication on the server 130 using the obtained user certificate at step S450.

As the user authentication request using the certificate is received from the mobile device 110, the server 130 performs authentication, and transmits a result indicating whether authentication has succeeded to the WEB 122 at step S460.

Here, when user authentication has failed, a result indicating authentication failure is transmitted to the WEB 122, and the authentication procedure is terminated.

The termination of the above-described authentication procedure represents authentication failure, and is performed in such a way that the server 130, the module 121, or the mobile device 110 transmits the result of authentication failure to the WEB 122, the server 130, the module 121 or the mobile device 110 if necessary, and show an authentication failure message to the user, thus terminating the authentication procedure.

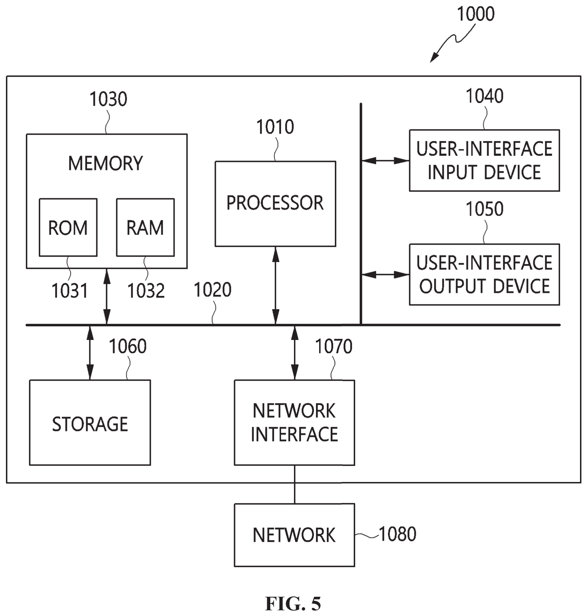

FIG. 5 is a diagram illustrating the configuration of a computer system according to an embodiment.

At least one of a user mobile device 110, a user PC 120 or a server 130 according to an embodiment, or a combination thereof may be implemented in a computer system 1000 such as a computer-readable storage medium.

The computer system 1000 may include one or more processors 1010, memory 1030, a user interface input device 1040, a user interface output device 1050, and storage 1060, which communicate with each other through a bus 1020. The computer system 1000 may further include a network interface 1070 connected to a network 1080. Each processor 1010 may be a Central Processing Unit (CPU) or a semiconductor device for executing programs or processing instructions stored in the memory 1030 or the storage 1060. Each of the memory 1030 and the storage 1060 may be a storage medium including at least one of a volatile medium, a nonvolatile medium, a removable medium, a non-removable medium, a communication medium or an information delivery medium, or a combination thereof. For example, the memory 1030 may include Read-Only Memory (ROM) 1031 or Random Access Memory (RAM) 1032.

According to embodiments, phishing attacks aimed at stealing personal information and active phishing attacks aimed at stealing authentication can be prevented.

A conventional authentication scheme is performed under the assumption that a user has accessed a correct site. That is, in order to prevent phishing attacks, the attention of the user was required. Even if the user accesses a phishing site, a phishing attack can be prevented when an authentication method of the present disclosure is used. The authentication method of the present disclosure provides a function of preventing not only a normal phishing attack but also an active phishing attack (using a VPN) by utilizing the fact that a mobile device and a Personal Computer (PC) are present on the same network.

Further, in the embodiments, personal information (e.g., ID, password, or the like) of a user is not entered into a user PC.

That is, the leakage of personal information may be prevented even when the user PC is placed in an environment in which the leakage of personal information is a concern, as in the case of a public place.

Furthermore, the user PC does not access a user certificate stored in a mobile device. This can prevent the leakage of a user certificate in an environment in which a PC is placed in a public place.

Consequently, a user certificate present in a mobile device may be used, and a user certificate is not accessed through a PC, thus preventing the leakage of a user certificate even if authentication is performed in a PC infected with malicious code.

Furthermore, according to embodiments, a user may conveniently use authentication. In particular, the entire authentication process is completed once the user performs only an authentication request, QR code scanning, and biometric recognition.

Furthermore, according to embodiments, an authentication method in which a module and a certificate for the module are introduced in an existing environment may be used. For example, a private key may be stored in a dedicated space of the module using a Trusted Platform Module (TPM) and an Operating System (OS), and a signature may be performed using this key. Therefore, a server may verify whether the module is tampered with by utilizing a module certificate.

Furthermore, according to embodiments, the present disclosure may be applied to various environments using certificate authentication. That is, in embodiments, certificate types are not limited. A module and a module certificate are introduced in an environment in which a certificate system managed by a certificate server is present, and thus the authentication method according to the present disclosure may be applied.

Furthermore, according to embodiments, by utilizing the step of checking the private IP addresses of a mobile device and a module, it is verified whether the module and the mobile device are present on the same network, thus determining the physical locations of devices.

Although the embodiment of the present disclosure has been disclosed, those skilled in the art will appreciate that the present disclosure can be implemented as other concrete forms, without departing from the scope and spirit of the disclosure as disclosed in the accompanying claims. Therefore, it should be understood that the exemplary embodiment is only for illustrative purpose and do not limit the scope of the present disclosure.

## Claims

1. A Quick Response (QR) code-based authentication method, comprising:
as a user authentication request is received from a user computer, transmitting, by a server, data required for QR code generation to the user computer;
as the user computer generates and outputs a QR code, scanning, by a user mobile device, the QR code; and
as an authentication request is received from the user mobile device using QR code scan information, performing, by the server, user authentication,
wherein the user computer comprises a web browser and an application module, and performs user authentication by verifying whether public Internet Protocol (IP) addresses of the user mobile device, the web browser, and the application module are identical to each other.

2. The QR code-based authentication method of claim 1, wherein transmitting the data required for QR code generation to the user computer comprises:
as the user authentication request is transmitted to the server through the web browser, performing two-way authentication and sharing of a first key between the server and the application module using a certificate of the server and a certificate of the application module; and
determining, by the server, whether authentication has failed depending on whether the public IP addresses of the web browser and the application module are identical to each other.

3. The QR code-based authentication method of claim 2, wherein transmitting the data required for QR code generation to the user computer further comprises:
as a private IP address and a subnet mask of the application module, which are encrypted using the first key, are received, transmitting data required for QR code generation, which is encrypted using the first key, to the application module.

4. The QR code-based authentication method of one of claims 1 to 3, wherein scanning the QR code comprises:
generating, by the application module, the QR code using the data received from the server and required for QR code generation and displaying the QR code on a screen of the user computer; and
scanning the QR code through an application previously installed on the user mobile device.

5. The QR code-based authentication method of one of claims 1 to 4, wherein performing the user authentication comprises:
as the authentication request is received from the user mobile device using the QR code scan information, determining whether authentication has failed depending on whether the public IP address of the web browser is identical to the public IP address of the user mobile device.

6. The QR code-based authentication method of claim 5, wherein performing the user authentication further comprises:
performing, by the server, one-way authentication on the user mobile device using a certificate of the server, and sharing a second key with the user mobile device as authentication succeeds;
transmitting, by the server, a private IP address and a subnet mask of the application module, which are encrypted using the second key, to the user mobile device;
transmitting, by the user mobile device, a private IP address and a subnet mask of the user mobile device, which are encrypted using the second key, to the server; and
delivering, by the server, a private IP address and a subnet mask of the user mobile device, which are encrypted using the first key, to the application module.

7. The QR code-based authentication method of claim 6, wherein performing the user authentication further comprises:
determining, by the user mobile device and the application module, whether authentication has failed by verifying whether the private IP addresses of each other are identical to actual IP addresses using the private IP addresses and the subnet masks that are respectively received by the user mobile device and the application module through internal network communication.

8. The QR code-based authentication method of claim 7, wherein performing the user authentication further comprises:
as an authentication success verification completion message is received from the application module, obtaining, by the user mobile device, a user certificate through biometric recognition of the user;
performing user authentication on the server using the user certificate; and
as a user authentication request using the certificate is received from the user mobile device, performing, by the server, authentication and transmitting a result indicating whether authentication has succeeded to the web browser.

9. A server, comprising:
a memory configured to store at least one program; and
a processor configured to execute the program,
wherein the program is configured to perform,
as a user authentication request is received from a user computer, transmitting data required for QR code generation to the user computer; and
as an authentication request is received from a user mobile device using QR code scan information, performing user authentication,
wherein the user computer comprises a web browser and an application module, and
wherein the program is configured to perform user authentication by verifying whether public Internet Protocol (IP) addresses of the user mobile device, the web browser, and the application module are identical to each other.

10. The server of claim 9, wherein the program is configured to:
in transmitting the data required for QR code generation to the user computer,
as the user authentication request is received through the web browser, perform two-way authentication and sharing of a first key between the server and the application module using a certificate of the server and a certificate of the application module, and
determine whether authentication has failed depending on whether the public IP addresses of the web browser and the application module are identical to each other.

11. The server of claim 10, wherein the program is configured to:
in transmitting the data required for QR code generation to the user computer,
as a private IP address and a subnet mask of the application module, which are encrypted using the first key, are received, transmit the data required for QR code generation, which is encrypted using the first key, to the application module.

12. The server of claim 10 or 11, wherein the program is configured to:
in performing the user authentication, as the authentication request is received from the user mobile device using QR code scan information, determine whether authentication has failed depending on whether the public IP address of the web browser is identical to the public IP address of the user mobile device.

13. The server of claim 12, wherein the program is configured to:
in performing the user authentication, perform one-way authentication on the user mobile device using the certificate of the server, and share a second key with the user mobile device when authentication has succeeded,
in performing the user authentication, transmit a private IP address and a subnet mask of the application module, which are encrypted using the second key, to the user mobile device, and
as a private IP address and a subnet mask of the user mobile device, which are encrypted using the second key, are received from the user mobile device, deliver a private IP address and a subnet mask of the user mobile device, which are encrypted using the first key, to the application module.

14. The server of claim 13, wherein the program is configured to:
in performing the user authentication, as the user authentication request using the certificate is received from the user mobile device, perform authentication and transmit a result indicating whether authentication has succeeded to the web browser.

15. A user computer, comprising:
a memory configured to store an application module; and
a processor configured to execute the application module,
wherein the application module is configured to perform two-way authentication with a server and sharing of a first key with the server using a certificate of the server and a certificate of the application module and, and then transmit a private IP address and a subnet mask of the application module to the server, and generate and output a QR code using data required for QR code generation, which is encrypted using the first key from the server.
